Europäisches Patentamt

European Patent Office

Office européen des brevets

(19)

(11) Numéro de publication: **0 252 813**
**A1**

# (12) DEMANDE DE BREVET EUROPEEN

(21) Numéro de dépôt: **87401532.4**

(22) Date de dépôt: **01.07.87**

(51) Int. Cl.⁴: **G 02 F 1/09**
**G 11 B 11/10**

(30) Priorité: **11.07.86 FR 8610210**

(43) Date de publication de la demande:
**13.01.88 Bulletin 88/02**

(84) Etats contractants désignés: **DE FR GB IT**

(71) Demandeur: **BULL S.A.**
**121 avenue de Malakoff P.B. 193.16**
**F-75764 Paris Cédex 16 (FR)**

(72) Inventeur: **Valette, Pascale**
**57, avenue Parmentier Appartement C 94**
**F-75011 Paris (FR)**

**Gueugnon Chaniot, Catherine**
**9, avenue Jean Jaurès**
**F-69007 Lyon (FR)**

(74) Mandataire: **Gouesmel, Daniel et al**
**BULL S.A. Division de la Propriété Industrielle 25, avenue**
**de la Grande-Armée**
**F-75016 Paris (FR)**

(54) Dispositif modulateur haute fréquence de polarisation de la lumière.

(57) Dispositif modulateur haute fréquence de polarisation de la lumière comprenant une source de lumière polarisée (SL), un générateur (BOBI) de champ magnétique $H_p$ périodique de pulsation $\omega$, et un grenat magnétooptique (GRI) recevant le faisceau émis par la source ($F_I$) et le champ $H_p$, pour produire un faisceau de lumière polarisée modulée (Fmi).

Selon l'invention, le générateur (BOBI) est constitué par une microbobine disposée sur le grenat de manière à produire un champ magnétique perpendiculaire à celui-ci, le grenat (GRI) étant monocristallin en couches minces, anisotrope, avec sa direction de facile aimantation perpendiculaire à son plan.

Applicable aux mémoires magnétooptiques.

FIG.5

## Description

### DISPOSITIF MODULATEUR HAUTE FREQUENCE DE POLARISATION DE LA LUMIERE

La présente invention concerne un dispositif modulateur haute fréquence de polarisation de la lumière. Elle est plus particulièrement applicable aux dispositifs optoélectroniques de lecture des informations des mémoires à disques magnétooptiques.

On sait que dans les mémoires à disques magnétooptiques, les informations sont portées par des disques magnétiques et lues par des dispositifs optoélectroniques. Les densités radiale et longitudinale d'enregistrement de ces mémoires sont de l'ordre respectivement de 10000 pistes par cm et 10000 informations par cm. (La densité radiale est le nombre de pistes par unité de longueur mesurée suivant le diamètre du disque alors que la densité longitudinale est le nombre d'informations par unité de longueur mesurée suivant la circonférence d'une piste).

Le mode de fonctionnement des mémoires à disques magnétooptiques repose sur l'effet magnétooptique. Ce dernier est caractéristique de certains matériaux magnétiques notamment les alliages comportant un métal tel que le fer, le cobalt ou le chrome, et un des métaux du groupe des terres rares lourds tel que le terbium, le gadolinium ou encore le dysprosium.

Cet effet concerne l'interaction d'une lumière polarisée rectiligne avec l'état magnétique du matériau. Elle peut avoir lieu par transmission de la lumière à travers le matériau et alors l'effet magnétooptique est appelé effet Faraday ou encore, avoir lieu par réflexion sur le milieu d'enregistrement et l'effet magnétooptique est alors appelé effet Kerr.

L'interaction d'une lumière polarisée rectiligne avec l'état magnétique du matériau constituant le milieu magnétique d'enregistrement a pour conséquence la rotation du vecteur champ électrique dans le plan perpendiculaire à la direction de propagation de la lumière, ou encore la rotation du plan de polarisation de la lumière qui comprend ce vecteur champ électrique et la direction de propagation.

S'il s'agit de l'effet Kerr, on observe qu'après réflexion du faisceau incident de lumière sur le matériau magnétooptique, le vecteur champ électrique de la lumière subit une rotation qu'on dit par convention, égale à un angle $(-\ominus)$ lorsque le faisceau lumineux rencontre un domaine d'aimantation négative (par convention) et égale à $(+\ominus)$ lorsque le faisceau rencontre un domaine d'aimantation positive (également par convention).

On voit que pour lire les informations enregistrées sur un milieu magnétique d'enregistrement magnétooptique, il suffit de détecter la rotation du vecteur champ électrique ou encore la rotation du plan de polarisation de la lumière. Ceci est effectué au moyen d'un analyseur de lumière disposé de telle sorte que, si la lumière se réfléchit sur un domaine magnétique d'aimantation négatif, on recueille à sa sortie une lumière d'intensité nulle, et que si la lumière se réfléchit sur un domaine magnétique d'aimantation positive, on recueille une lumière d'intensité non nulle. En plaçant derrière l'analyseur de lumière un ou plusieurs transducteurs photoélectroniques, encore appelés photodétecteurs, on recueille à la sortie de ceux-ci un signal de tension nulle pour un domaine magnétique d'aimantation négative et un signal de tension non nulle pour un domaine d'aimantation positive.

De plus amples détails sur la manière dont sont lues les informations dans une mémoire magnétooptique sont données dans le brevet français no 2.514.913 déposé par la Compagnie Internationale pour l'Informatique CII HONEYWELL BULL le 16 octobre 1981 et dont l'inventeur est Monsieur Jean-Pierre LAZZARI.

Les angles de rotation magnétooptiques $(\ominus)$ sont généralement faibles et, par conséquent, la différence d'intensité lumineuse entre une lumière d'intensité nulle et une lumière d'intensité non nulle à la sortie de l'analyseur est très faible. Il s'en suit que le signal de lecture recueilli à la sortie des photo-détecteurs est faible, alors que le signal du aux bruits est relativement important.

Pour améliorer le rapport signal/bruit à la lecture, il a été proposé, dans la pratique courante, de moduler la polarisation du faisceau de lumière envoyé sur le matériau magnétooptique, comme l'indique, par exemple l'article de SAFWAT G. ZAKY publié dans "IEEE transactions on magnetics" de Sept. 1972 sous le titre "Dynamic detection of Faraday rotation".

Moduler la polarisation d'un faisceau de lumière consiste à faire osciller d'un angle $\ominus' = a \sin \omega t$ le plan de polarisation de celle-ci autour d'une position moyenne. A la sortie de l'analyseur et des détecteurs photoélectroniques, on détecte un faisceau de lumière porteur dont l'amplitude est proportionnelle à la rotation $\ominus$ du plan de polarisation de la lumière dû à sa réflexion sur le matériau magnétique constituant le milieu d'enregistrement. En disposant à la sortie des photo-détecteurs des moyens de filtrage et des amplificateurs, on élimine les niveaux continus, et on s'affranchit des bruits que ceux-ci comportent à savoir les bruits dus aux photo-détecteurs, les bruits dus à la variation de puissance de l'émetteur laser de lumière polarisée, les bruits dus aux poussières, aux rayures sur les polariseurs et analyseurs et aux défauts que le faisceau de lumière peut rencontrer par exemple sur le disque magnétooptique.

Les avantages énoncés ci-dessus s'ajoutent à l'amélioration connue du rapport signal/bruit, due à l'utilisation d'un signal modulé.

On connaît des dispositifs modulateurs de la polarisation de la lumière décrits, par exemple, dans le diplôme d'étude approfondie de Science des matériaux soutenus par Mme Pascale VALETTE en juin 84 à l'Université Paris VI intitulé "Modulation de polarisation avec des grenats magnétooptiques". Un tel dispositif associe un générateur de champ magnétique périodique de pulsation $\omega$ à un grenat magnétooptique transparent à la lumière dont l'aimantation est parallèle à sa surface et dont les propriétés magnétooptiques reposent sur l'effet Faraday. Le champ périodique est envoyé sur le grenat avec une incidence $\alpha$, différente de 90°.

Lorsque le champ magnétique de pulsation $\omega$ est envoyé sur le grenat magnétooptique, l'aimantation dans celui-ci change de sens périodiquement (il faut bien entendu que l'intensité du champ magnétique soit supérieure au champ coercitif du matériau constituant le grenat magnétooptique). Il s'en suit que l'angle de rotation du plan de polarisation de la lumière (due à l'effet Faraday) envoyée sur le grenat magnétooptique simultanément au champ magnétique, varie lui aussi périodiquement avec une pulsation voisine de la pulsation $\omega$. Après avoir traversé le grenat magnétooptique, le faisceau de lumière polarisé subit une rotation $\ominus'$ due à l'effet magnétooptique (égale à a sin t) de son plan de polarisation par rapport au plan de polarisation du faisceau incident envoyé sur la surface du grenat magnétooptique.

L'inconvénient majeur de ce type de dispositif modulateur est de ne pouvoir fonctionner qu'aux basses fréquences, alors que pour lire les informations dans les mémoires magnétooptiques dont les densités d'enregistrement sont celles mentionnées plus haut, il est nécessaire de moduler la polarisation de la lumière avec de très hautes fréquences. En effet, le débit de lecture des informations dans les mémoires magnétooptiques à fortes densités d'enregistrement est de l'ordre de une à quelques dizaines de millions d'informations par seconde, ce qui correspond à des fréquences de lecture de quelques dizaines de mégahertz. Pour que le faisceau de lumière modulé soit porteur, il faut que sa fréquence soit au moins double de celle de la fréquence de lecture et soit donc de l'ordre de quelques dizaines de mégahertz. Or les dispositifs modulateurs de polarisation de la lumière du type de ceux existant dans la pratique courante tels que celui décrit ci-dessus ne peuvent fonctionner qu'à des fréquences au maximum égales à 100 kilohertz.

La présente invention permet de remédier à ces inconvenients et concerne un dispositif modulateur haute fréquence de polarisation de la lumière pouvant être utilisé dans les dispositifs optoélectroniques de lecture des mémoires magnétooptiques à des fréquences de quelques mégahertz voire quelques dizaines de mégahertz.

Selon l'invention, le dispositif modulateur haute fréquence de polarisation de la lumière comprend :
- une source de lumière polarisée émettant un faisceau de lumière polarisée incident,
- un générateur de champ magnétique périodique de pulsation $\omega$,
- un grenat magnétooptique recevant le faisceau de lumière polarisée et le champ magnétique périodique, produisant un faisceau de lumière polarisée modulé ayant subi une rotation $\ominus'$ égale à a sin $\omega$ t de son plan de polarisation par rapport au plan de polarisation du faisceau incident, est caractérisé en ce que le générateur est constitué par une microbobine disposée sur le grenat magnétooptique de manière à produire un champ magnétique perpendiculaire à celui-ci, ce dernier monocristallin en couches minces, étant magnétiquement anisotrope avec sa direction de facile aimantation perpendiculaire à son plan.

D'autres caractéristiques et avantages de la présente invention apparaîtront dans la description suivante, donnée à titre d'exemple non limitatif et en se référant aux figures annexées.

Sur ces dessins :
- la figure 1 : composée des figures a, b, c, illustre des rappels concernant les effets magnétooptiques Kerr et Faraday,
- la figure 2 est une représentation schématique d'un dispositif optoélectronique de lecture d'informations contenues sur un support magnétique tel que décrit dans les brevet n° 2.514.913 précité,
- la figure 3 : composée des figures 3a et 3b illustre des rappels concernant la modulation de la polarisation de la lumière,
- la figure 4 : montre comment l'on peut insérer un dispositif modulateur de polarisation de la lumière selon l'invention dans le dispositif optoélectronique de lecture représenté à la figure 2,
- la figure 5 : est une vue agrandie du dispositif modulateur de polarisation de la lumière selon l'invention montrée à la figure 4,
- la figure 6 : est un exemple de réalisation préférée du dispositif modulateur de polarisation de la lumière selon l'invention,
- la figure 7 : composée des figures 7a et 7b montre comment on monte le modulateur selon l'invention à l'intérieur d'un boîtier.

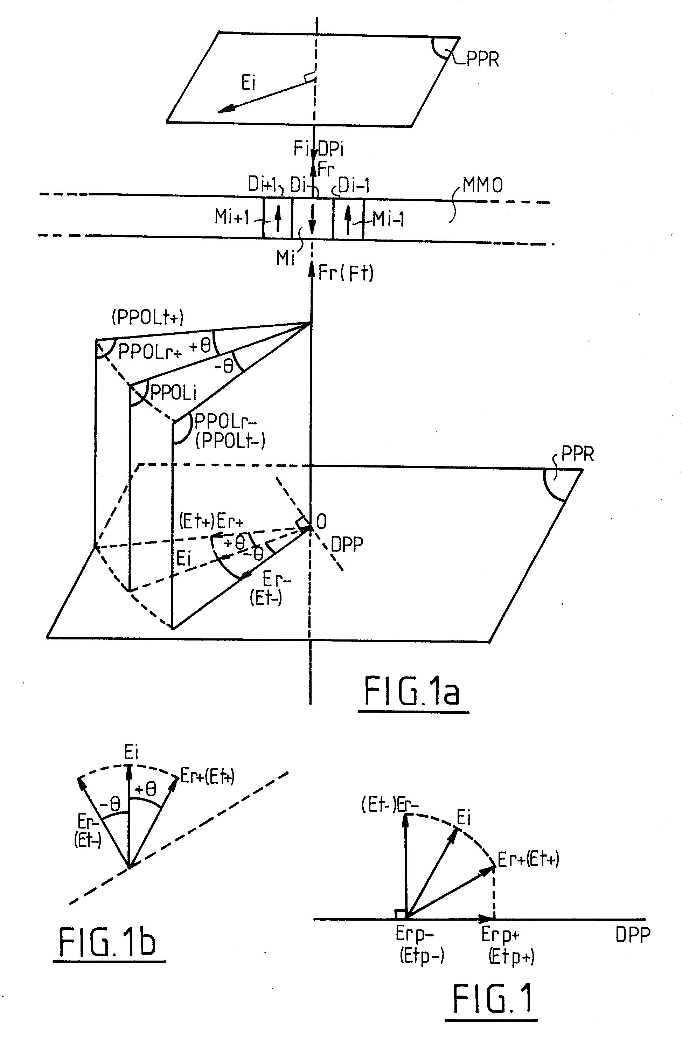

On comprendra mieux comment est constitué et comment fonctionne le dispositif modulateur de polarisation de la lumière selon l'invention, en faisant quelques rappels sur l'effet magnétooptique, la lecture des informations enregistrées sur les milieux magnétooptiques, les dispositifs optoélectroniques de lecture de ces informations, et la modulation de polarisation de la lumière. Ces rappels sont illustrés par les figures 1, 2, 3.

## RAPPELS SUR L'EFFET MAGNETOOPTIQUE

On considère la figure 1.

On considère un milieu magnétooptique MMO que l'on suppose sensible à l'effet Kerr (le raisonnement est identique s'il s'agit d'un milieu magnétooptique sensible à l'effet Faraday). On suppose que le milieu magnétooptique MMO est à aimantation perpendiculaire, c'est-à-dire que son aimantation est normale à sa surface. On a enregistré sur ce milieu MMO un grand nombre de domaines magnétiques de faibles dimensions (quelques microns), dont 3 seulement ont été représentés à la figure 1a pour simplifier. Ces domaines sont respectivement désignés par $D_{i-1}$, $D_i$, $D_{i+1}$. Les vecteurs aimantation respectifs à l'intérieur de chacun de ces domaines sont $M_{i-1}$, $M_i$, $M_{i+1}$. On envoie perpendiculairement à la surface du milieu MMO un faisceau incident $F_i$ de lumière polarisée rectiligne, selon une direction de propagation $DP_i$. Dans un plan de propagation PPR normal à la direction de propagation $DP_i$, le champ électrique du faisceau incident $F_i$ est $E_i$ et a la direction indiquée aux figures 1a, 1b et 1c, la figure 1a étant une vue dans l'espace, alors que les figures 1b et 1c sont des vues en projection sur le plan PPR. Le plan de polarisation du faisceau de lumière $F_i$ est défini par la direction de propagation $DP_i$ et par le vecteur $E_i$. On le désigne par $PPOL_i$.

En se réfléchissant sur le milieu MMO, le faisceau $F_i$ devient le faisceau réfléchi $F_r$ si le milieu MMO est sensible à l'effet Kerr, (le faisceau transmis $F_t$ si MMO est sensible à l'effet Faraday). Lorsque le faisceau $F_i$ se réfléchit sur un domaine magnétique d'aimantation négative telle que le domaine $D_i$, le faisceau réfléchi est tel que son champ électrique $E_{r-}$ ($E_{t-}$) a tourné d'un angle ($-\ominus$) par rapport au champ $E_i$ du faisceau incident $F_i$. Le plan de polarisation du faisceau réfléchi $F_r$ ($F_t$) est alors $PPOL_{r-}$ ($PPOL_{t-}$), l'angle dièdre entre ce plan et le plan $PPOL_i$ étant aussi égal à ($-\ominus$).

De même, lorsque le faisceau incident $F_i$ se réfléchit sur un domaine magnétique d'aimantation positive, telle que par exemple le domaine $D_{i+1}$, le faisceau réfléchi $F_r$ ($F_t$) est tel que son champ électrique $E_{r+}$ ($E_{t+}$) subit une rotation ($+\ominus$) par rapport au champ électrique $E_i$ du faisceau $F_i$. Le plan de polarisation $PPOL_{r+}$ ($PPOL_{t+}$) fait alors avec le plan $PPOL_i$ un angle dièdre égal à ($+\ominus$). La figure 1b permet de mieux voir les positions relatives des champs électriques $E_i$, $E_{r-}$, $E_{r+}$ ($E_{t-}$, $E_{t+}$) des faisceaux incident et réfléchi $F_i$, $F_r$ ($F_t$) selon que $F_i$ se réfléchit sur un domaine d'aimantation négative ou positive.

## RAPPELS SUR LA LECTURE MAGNETOOPTIQUE

Ainsi qu'il a été décrit plus haut, pour lire les informations enregistrées sur un milieu magnétooptique tel que MMO, il faut déterminer le sens de l'aimantation dans chacun des domaines $D_i$, ce qui revient à déterminer si le vecteur champ électrique a tourné d'un angle $-\ominus$ ou d'un angle $+\ominus$. Pour ce faire, on place sur le chemin de propagation du faisceau réfléchi $F_r$ ($F_t$), un analyseur de lumière. Celui-ci est généralement constitué d'un cristal présentant une direction priviligiée de transmission de la polarisation de la lumière, par exemple, DPP, direction qui est représentée en traits interrompus sur la figure 1b et en traits pleins sur la figure 1c. On place l'analyseur de telle sorte que la direction DPP soit normale au champ électrique $E_{r-}$ ($E_{t-}$).

A la sortie de l'analyseur, on recueille une lumière dont l'intensité lumineuse est proportionnelle au carré de la projection du vecteur champ électrique sur la direction DPP.

Ainsi, si le faisceau $F_r$ ($F_t$) provient d'un domaine d'aimantation négative, on recueille à la sortie de l'analyseur une lumière d'intensité lumineuse proportionnelle au carré du module du vecteur $E_{rp-}$ ($E_{tp-}$) projection du vecteur $E_{r-}$ sur la direction DPP. De même, si le faisceau $F_r$ ($F_t$) provient d'un domaine d'aimantation positive, on recueille à la sortie de l'analyseur une lumière dont l'intensité lumineuse est proportionnelle au carré du module du vecteur $E_{rp+}$ ($E_{tp+}$) projection du vecteur $E_{r+}$ ($E_{t+}$) sur la direction DPP. On voit donc bien que sie le faisceau $F_r$ ($F_t$) provient d'un domaine d'aimantation négative, on recueille à la sortie de l'analyseur une lumière d'intensité quasiment nulle, alors que si le faisceau $F_r$ ($F_t$) provient d'un domaine d'aimantation positive, on recueille à la sortie de l'analyseur une lumière d'intensité non nulle (un raisonnement identique peut être fait pour les signaux délivrés par les transducteurs photoélectroniques placés à la sortie de l'analyseur de lumière).

## RAPPELS SUR LES DISPOSITIFS DE LECTURE MAGNETOOPTIQUE

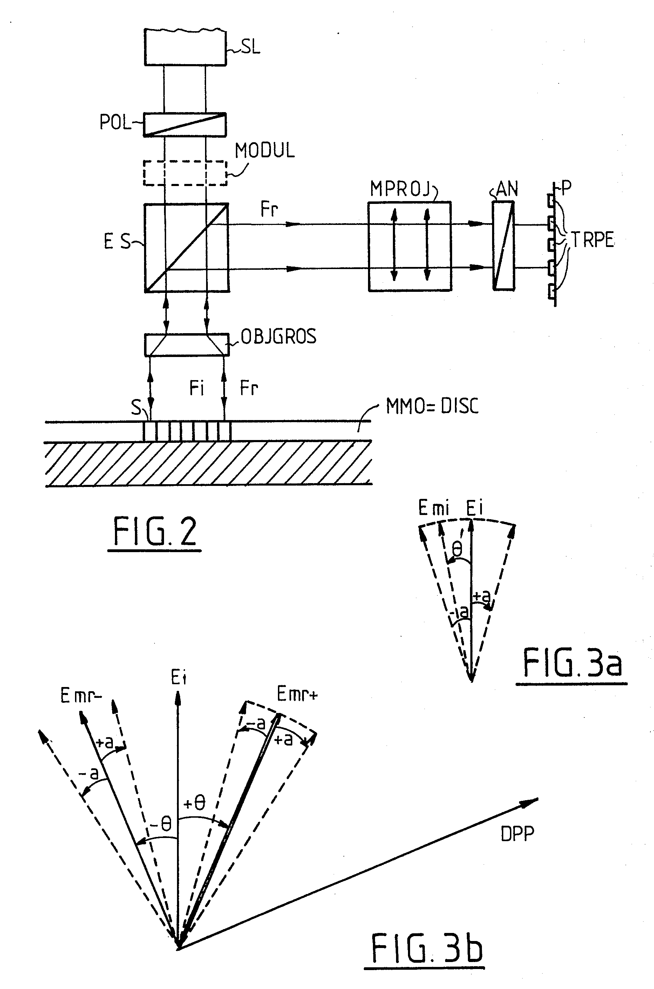

On considère la figure 2.

Le dispositif optoélectronique de lecture dont le schéma est représenté sur cette dernière fonctionne selon les modalités de lecture illustrée par les figures 1a, 1b et 1c.

On suppose que le milieu magnétooptique dont on cherche à lire les informations par le dispositif optoélectronique de la figure 2 est un disque magnétique DISC.

Les différents éléments constitutifs essentiels de ce dispositif de lecture optoélectronique sont les suivants :
- une source de lumière SL,
- un polariseur POL,
- un élément séparatuer ES du faisceau incident $F_i$ et du faisceau réfléchi $F_r$,
- une optique de grossissement OBJGROS permettant d'éclairer la surface du disque DISC sur une surface S telle que l'on observe simultanément plusieurs pistes (au moins une dizaine) et une pluralité de domaines magnétiques à l'intérieur de chaque piste,
- des moyens de projection MPROJ,
- un analyseur de lumière AN, un plan de projection P où est projetée l'image de la surface éclairée par le faisceau incident $F_i$, image obtenue par les moyens de projection MPOJ, l'analyseur AN étant disposé entre les moyens de projection et le plan P,
- un ensemble de transducteurs photoélectroniques TRPE délivrant un ensemble de signaux électriques corrrespondant aux différents domaines magnétiques du disque DISC observés à l'intérieur de la surface éclairée par le faisceau $F_i$.

L'ensemble constitué par la source SL et le polariseur POL émet un faisceau $F_i$ de lumière parallèle relativement monochromatique et polarisée.

Le faisceau incident $F_i$ passe à travers l'élément séparateur ES et est envoyé à travers l'optique de grossissement OBJGROS normalement à la surface du disque DISC. La surface S ainsi éclairée est sensiblement circulaire. On peut y observer quelques dizaines, voire une centaine de pistes et quelques dizaines, voire une centaine de domaines magnétiques à l'intérieur de chaque piste.

Le faisceau réfléchi $F_r$ passe successivement à travers l'optique OBJGROS et l'élément séparateur ES avant de traverser les moyens de projection MPROJ. La lumière du faisceau réfléchi $F_r$ passe à travers l'analyseur de lumière AN avant d'être projetée sur le plan P où sont disposés les transducteurs photoélectriques TRPE qui délivrent un signal de tension nulle ou non nulle suivant que les domaines magnétiques rencontrés par le faisceau $F_i$ sont d'aimantation négative ou positive.

L'ensemble des signaux délivrés par les transducteurs TRPE est exploité, par exemple, de la manière indiquée dans la demande de brevet No 82.08.406 par la Compagnie Internationale pour l'Informatique CII HONEYWELL BULL le 14 mai 1982 sous le titre " Procédé optoélectronique de lecture d'informations contenues sur un support magnétique et dispositif pour le mettre en oeuvre".

## RAPPELS SUR LA MODULATION DE POLARISATION DE LA LUMIERE ET LES DISPOSITIFS MODULATEURS

Ainsi qu'il a été décrit plus haut, pour améliorer le rapport signal/bruit d'un dispositif optoélectronique de lecture d'informations contenues sur un support d'enregistrement magnétooptique, on module la polarisation du faisceau incident $F_i$. Ceci est obtenu en disposant un dispositif modulateur de polarisation MODUL représenté en traits interrompus à la figure 2, entre le polariseur POL et l'élément séparateur ES. Moduler la polarisation de la lumière consiste, comme il est indiqué à la figure 3a à faire osciller périodiquement le vecteur champ électrique autour de sa position moyenne $E_i$ (dont on voit la trace sur le plan PPR, à la figure 3a). Si on désigne par $E_{mi}$ le vecteur champ électrique modulé, et si $\Theta'$ est l'angle entre $E_{mi}$ et $E_i$, on a $\Theta' = a \sin \omega t$ ou a est l'amplitude d'oscillation du champ modulé $E_{mi}$.

L'effet de la réflexion du faisceau incident $F_i$ sur le milieu d'enregistrement magnétooptique MMO est mis en évidence à la figure 3b.

Pour un domaine magnétique d'aimantation négative, le vecteur champ électrique du faisceau réfléchi $F_r$, à savoir $E_{mr-}$ subit une rotation globale $(- \Theta + \Theta',)$ alors le vecteur champ électrique $E_{mr+}$ du faisceau réfléchi $F_r$ après réflexion sur un domaine d'aimantation positive subit une rotation globale $(\Theta + \Theta')$. Ainsi qu'il a été indiqué plus haut, l'inconvénient majeur des modulateurs de polarisation de la lumière selon l'Art antérieur est de ne pouvoir moduler la polarisation de la lumière qu'à des fréquences relativement basses, qui ne sont pas compatibles avec la fréquence de lecture des informations sur les pistes des disques des mémoires magnétooptiques, qui sont de l'ordre de quelques mégahertz à quelques dizaines de mégahertz.

## DISPOSITIF MODULATEUR SELON L'INVENTION

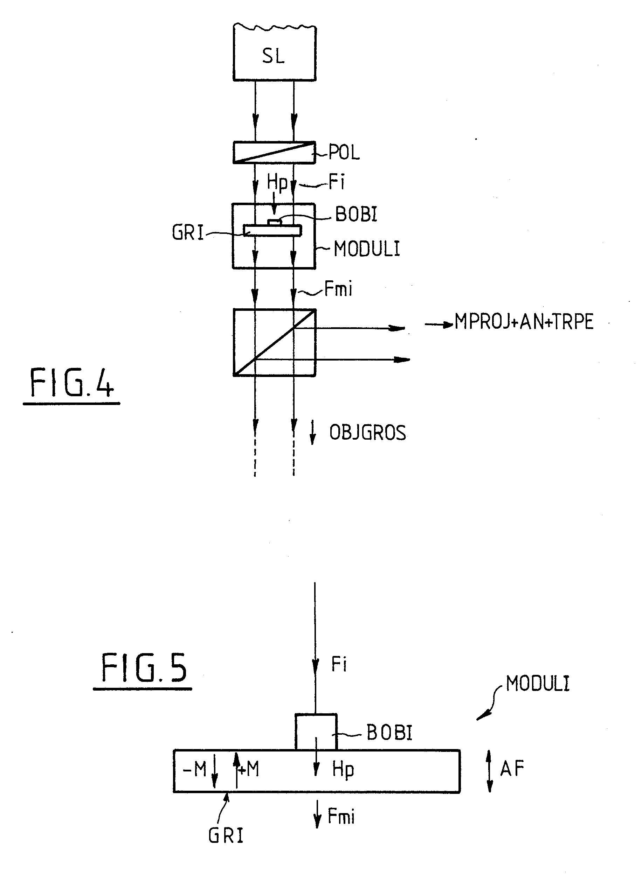

Le dispositif modulateur de polarisation de la lumière selon l'invention montré aux figures 4 à 7 permet de trouver une solution aux problèmes mentionnés ci-dessus.

Un tel modulateur MODULI comprend :
- un grenat magnétooptique en couches minces monocristallin GRI, magnétiquement anisotrope dont la Direction de facile aimantation AF (voir figure 5) est perpendiculaire au plan du grenat,
- une micro bobine BOBI de très faible diamètre (inférieur au mm) plaquée contre le grenat GRI. Le faisceau de lumière polarisé incident $F_i$ est envoyé normalement à la surface du grenat GRI, alors que la micro-bobine BOBI produit un champ magnétique périodique $H_p$ de pulsation $\omega$ envoyé lui aussi, normalement à la surface du grenat. La fréquence d'oscillations du champ $H_p$ est de l'ordre de plusieurs dizaines de mégahertz et son amplitude est d'une vingtaine d'oersteds.

Lorsque le grenat magnétooptique est soumis au champ $H_p$, son aimantation perpendiculaire à sa surface, oscille entre les amplitudes $-M$ et $+M$ (voir figure 5) à une fréquence voisine de la fréquence d'oscillation du champ périodique magnétique $H_p$. Cela signifie que la rotation magnétooptique par effet Faraday du faisceau de lumière incident $F_i$ va osciller à la même fréquence et que le faisceau de lumière polarisé modulé produit par le modulateur MODULI va être tel que son vecteur champ électrique $E_{mi}$ va faire un angle $\Theta'$ avec le vecteur champ électrique du faisceau incident $F_i$ (avec $\Theta' = a \sin \omega t$, voir figure 3a).

Les exigences auxquelles doit répondre le matériau constituant le grenat magnétooptique GRI sont :

1) faible absorbtion à la longueur d'ondes du faisceau incident de lecture $F_i$ (celle-ci se situe habituellement dans le domaine du visible, par exemple le rouge) ce qui implique que l'épaisseur du grenat est très faible, de l'ordre de quelques microns,

2) une rotation Faraday suffisante à la fréquence d'oscillation du faisceau modulé, de l'ordre de quelques dixièmes de degrés environ. Cette rotation dénommée $\Theta$eff est appelée rotation Faraday dynamique. On montre qu'elle est proportionnelle à la rotation Faraday statique $\Theta_F$ (rotation obtenue avec une lumière polarisée non modulée) et dépend d'une part, de la constante d'anisotropie du matériau constituant le grenat ($\Theta_F$ augmente si la constante d'anisotropie diminue) et d'autre part, de l'aimantation de saturation $M_S$ selon la direction de facile aimantation ($\Theta_F$ augmente si $M_S$ augmente). La rotation statique $\Theta_F$ dépend de la composition du matériau lui-même. Satisfaire les exigences 1 et 2 ci-dessus revient à obtenir, à la sortie des photodétecteurs TRPE, un signal d'amplitude suffisante, avec un rapport signal/bruit correct.

3) une réponse dynamique permettant une modulation de la polarisation de la lumière à une fréquence au moins deux fois supérieure à la fréquence de lecture des informations sur une piste du disque magnétooptique, à savoir plusieurs dizaines de mégahertz. On montre que cela permet d'avoir un rapport signal/bruit maximum. Pour avoir une bonne réponse dynamique, il faut que le grenat magnétooptique GRI soit monocristallin, réalisé en couches minces et avoir une aimantation perpendiculaire à son plan, (direction de facile aimantation perpendiculaire à son plan).

Il est possible d'obtenir de tels grenats magnétooptiques en couches minces obéissant aux critères énoncés ci-dessus en procédant par épitaxie en phase liquide de la manière indiquée dans la revue "Electronics and Optics", sous le chapitre "thin solids films" 114 (1984) entre les pages 33 et 43, sous le titre "The growth of bismuth Iron garnet layers by liquid phase epitaxy" dont les auteurs sont W. TOLKSDORF et C. P. KLAGES.

Pour obtenir les performances voulues, il faut optimiser la composition du grenat, son orientation cristallographique, son épaisseur.

Parmi les grenats permettant d'obtenir de bonnes performances, on peut citer les grenats du type $Y_{3-x} Bi_x Fe_{5-y} Ga_y O_{12}$ qui ont une rotation Faraday $\ominus_F$ de l'ordre de quelques milliers de degrés par cm d'épaisseur, ou encore les grenats du type $(YGdPr Bi)_3 (FeGa)_5 O_{12}$, qui ont une rotation $\ominus_F$ supérieure à 10 000 degrés par cm d'épaisseur. L'un comme l'autre de ces grenats ont un faible champ coercitif (quelques oersteds).

La microbobine BOBI est de très faible dimension puisque son diamètre est inférieur à 1 mm (de l'ordre de 0,8 mm dans un exemple de réalisation préférée) et sa longueur de quelques millimètres (de l'ordre de 2 mm dans un exemple de réalisation préférée). Le nombre de tours est de l'ordre d'une dizaine. Ainsi, on réalise une bobine dont l'impédance est faible pour les fréquences considérées (quelques ohms). Il est clair que l'utilisation d'une bobine de dimensions plus élevées, donnerait une valuer de la self L de la bobine plus importante et par suite une impédance plus importante, ce qui provoquerait des pertes selfiques et ohmiques également importantes et limiterait la fréquence d'utilisation.

De plus, l'utilisation d'une bobine de faible dimension permet de concentrer le champ magnétique sur une zone de faible dimension du grenat de l'ordre de grandeur de celle du faisceau lumineux $F_i$. Le champ magnétique $H_p$ produit par la micro-bobine a une amplitude d'une vingtaine d'oersteds, en tout cas supérieure au champ coercitif du grenat magnétooptique GRI ce qui permet d'assurer dans les meilleures conditions le renversement de l'aimantation M à l'intérieur de ce grenat.

Un autre avantage d'utiliser une bobine de faibles dimensions, est que le champ magnétique produit a une direction pratiquement normale à la surface du grenat et par conséquent, parallèle à l'aimantation dans celui-ci, ce qui facilite d'autant le renversement de celle-ci.

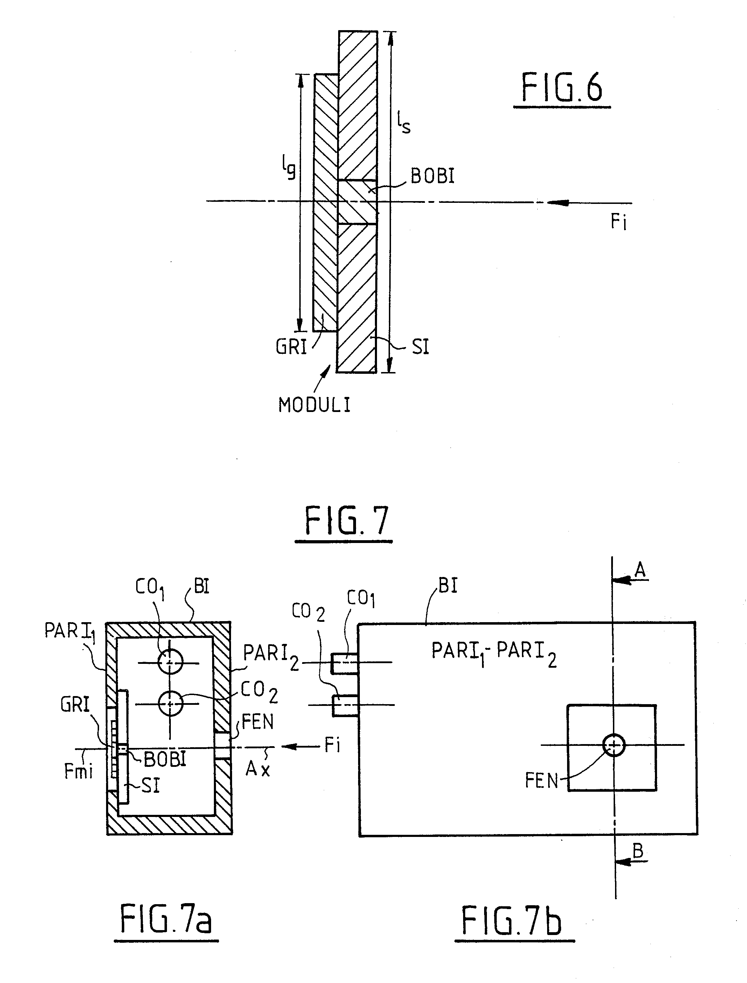

Dans une forme de réalisation préférée de l'invention, illustrée par la figure 6, on colle le grenat GRI sur la bobine qui est elle-même noyée à l'intérieur d'un substrat isolant magnétiquement et électriquement SI. L'épaisseur d'isolant est de l'ordre de grandeur de la longueur de la micro-bobine BOBI. Le substrat SI et le grenat GRI ayant sensiblement la forme d'un rectangle, la longueur $l_s$ du substrat est supérieure à la longueur $l_g$ du grenat GRI. Cela permet de fixer le modulateur MODULI à l'intérieur d'un boîtier de forme parallélipédique BI, comme indiqué à la figure 7a, au moyen de la partie du substrat débordant par rapport au grenat GRI.

Le substrat FI est fixé à l'intérieur de l'une des grandes parois $PARI_1$ du parallélipède constituant le boîtier BI. A l'intérieur de la paroi $PARI_2$ du boîtier BI, parallèle à la paroi $PARI_1$, est pratiquée une fenêtre FEN ayant même axe de symétrie Ax que l'axe de symétrie du modulateur MODULI perpendiculaire au grenat et lequel est confondu avec l'axe de symétrie de la bobine BOBI. Cet axe Ax est confondu avec l'axe optique du faisceau incident $F_i$. Il comprend également deux bornes de connexion $CO_1$, $CO_2$ disposées sur une paroi perpendiculaire au deux parois $PARI_1$, $PARI_2$ permettant de connecter les bornes de la microbobine BOBI (non représentées pour simplifier le dessin à la figure 7a et 7b) à un générateur de signal haute fréquence associé à un amplificateur.

A l'intérieur du boîtier, on dispose également un circuit composé d'une capacité C et d'une résistance R, qui, associé à la self L de la bobine BOBI, constitue un circuit résonant haute fréquence accordé sur la fréquence de modulation voulue.

## Revendications

1) Dispositif modulateur haute fréquence de polarisation de la lumière comprenant :
- une source de lumière polarisée (SL) émettant un faisceau de lumière polarisée incident ($F_i$),
- un générateur (BOBI) de champ magnétique périodique $H_p$ de pulsation $\omega$,
- un grenat magnétooptique (GRI) recevant le faisceau de lumière polarisée $F_i$ et le champ magnétique périodique $H_p$, produisant un faisceau de lumière polarisée modulée ($F_{mi}$) ayant subi une rotation due à l'effet magnétooptique $\ominus$ égale à a sin $\omega$ t de son plan de polarisation par rapport au plan de polarisation du faisceau incident $F_i$ caractérisé en ce que le générateur (BOBI) est constitué par une microbobine disposée sur le grenat de manière à produire un champ magnétique perpendiculaire à celui-ci, le grenat magnétooptique (GRI) monocristallin en couches minces étant magnétiquement anisotrope avec sa direction de facile aimantation perpendiculaire à son plan.

2) Dispositif selon la revendication 1 caractérisé en ce que le grenat magnétooptique (GRI) sensible à l'effet magnétooptique Faraday présente une faible absorbtion à la longueur d'ondes du faisceau de lecture, sa réponse dynamique permettant une modulation de la polarisation de la lumière à une fréquence de l'ordre de plusieurs dizaines de mégahertz.

3) Dispositif selon la revendication 2 caractérisé en ce que la formule chimique du grenat magnétooptique (GRI) est du type $Y_{3-x} Bi_x Fe_{5-y} Ga_y O_{12}$.

4) Dispositif selon la revendication 2 caractérisé en ce que la formule chimique du grenat (GRI) est du type $(Y \, Gd \, Pr \, Bi)_3 (Fe \, Ga)_5 O_{12}$.

5) Dispositif selon l'une des revendications 1, 2, 3, 4 caractérisé en ce que le grenat (GRI) est obtenu par épitaxie en phase liquide.

0252813

FIG.1a

FIG.1b

FIG.1

FIG.2

FIG.3a

FIG.3b

FIG.4

FIG.5

0252813

## FIG.6

$l_s$

$l_g$

BOBI

Fi

GRI · SI

MODULI

## FIG.7

$CO_1$   BI

$PARI_1$

GRI

Fmi   BOBI   Ax

SI

$CO_2$   $CO_1$   BI

$PARI_2$   $PARI_1$ - $PARI_2$   A

$CO_2$

FEN

Fi

FEN

B

FIG.7a          FIG.7b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 547 812 (AMPEX CO.)<br>* Revendication 1; page 4, colonne de droite, lignes 14-31; figure 5 * | 1 | G 02 F 1/09<br>G 11 B 11/10 |
| | --- | | |
| A | FR-A-1 387 866 (IBM)<br>* Page 5, colonne de droite, lignes 10-17,41-46; figure 2 * | 1 | |
| | --- | | |
| D,A | IEEE TRANSACTIONS ON MAGNETICS, vol. MAG-8, no. 3, septembre 1972, pages 528-530, New York, US; S.G. ZAKY: "Dynamic detection of faraday rotation"<br>* figures 1-3; page 529 de la dernier paragraphe - page 530, fin de l'article * | 1,2 | |
| | --- | | **DOMAINES TECHNIQUES RECHERCHES (Int. Cl.4)** |
| A | REVIEW OF SCIENTIFIC INSTRUMENTS, vol. 55, no. 5, mai 1984, pages 743-746, American Institute of Physics, New york, US; R.M. DUFFY et al.: "Design of faraday rotators and modulators"<br>* Page 743: "Introductions; figure 1 * | 1 | G 02 F<br>G 11 B |
| | ---        -/- | | |

Le présent rapport de recherche a été établi pour toutes les revendications

| Lieu de la recherche | Date d'achèvement de la recherche | Examinateur |
|---|---|---|
| LA HAYE | 07-10-1987 | FARNESE G.P. |

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl.4) |
| A | THIN SOLID FILMS, vol. 114, no. 1/2, avril 1984, pages 187-219, Elsevier Sequoia, Lausanne, CH; P. PAROLI: "Magneto-optical devices based on garnet films" * Page 191, lignes 1-12; page 193, dernier paragraphe; page 194, lignes 20-31 * | 2,3,5 | |
| | --- | | |
| D,A | EP-A-0 077 693 (CII-HB) * Figures 1,2,5,7 * | 1 | |
| | --- | | |
| A | EP-A-0 086 387 (HITACHI) * Revendication 1 * | 3,4 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 07-10-1987 | FARNESE G.P. |